# EUROPÄISCHE PATENTSCHRIFT

(11) **EP 2 246 694 B1**
(45) Veröffentlichungstag und Bekanntmachung des Hinweises auf die Patenterteilung: **29.02.2012**
(21) Anmeldenummer: 10004398.3
(22) Anmeldetag: 26.04.2010
(51) Int. Cl.: G01N 27/414

(54) **Verfahren und Vorrichtung zur Messung der Konzentration eines Analyten in einer Probeflüssigkeit**
Method and apparatus for measuring the concentration of an analyte in a liquid sample
Procédé et dispositif de mesure de la concentration d'un analyte dans un liquide échantillon

(30) Priorität: 29.04.2009 FR 0952825
(43) Veröffentlichungstag der Anmeldung: 03.11.2010
(73) Patentinhaber: Bürkert Werke GmbH, 74653 Ingelfingen (DE); Bürkert & Cie. S.A.R.L., 67220 Triembach-au-Val (FR); Fachhochschule Aachen, 52428 Jülich (DE)
(72) Erfinder: Coppe, Thomas, 68370 Orbey (FR); Henry, Jean-Luc, 68000 Colmar (FR); Schöning, Michael, 52428 Jülich (DE)
(74) Vertreter: Prinz & Partner

(56) Entgegenhaltungen:
- EP-A- 0 213 825
- WO-A-02/052252
- DE-A1- 19 708 166
- ARJANG HASSIBI ET AL: "A Programmable 0.18-CMOS Electrochemical Sensor Microarray for Biomolecular Detection" IEEE SENSORS JOURNAL, IEEE SERVICE CENTER, NEW YORK, NY, US LNKD- DOI:10.1109/JSEN.2006.883904, Bd. 6, Nr. 6, 1. Dezember 2006 (2006-12-01), Seiten 1380-1388, XP011150479 ISSN: 1530-437X
- SCHONING M J ET AL: "A novel silicon-based sensor array with capacitive EIS structures" SENSORS AND ACTUATORS B, ELSEVIER SEQUOIA S.A., LAUSANNE, CH, Bd. 47, Nr. 1-3, 30. April 1998 (1998-04-30), Seiten 225-230, XP004147342 ISSN: 0925-4005
- POGHOSSIAN A ET AL: "Cross-sensitivity of a capacitive penicillin sensor combined with a diffusion barrier" SENSORS AND ACTUATORS B, ELSEVIER SEQUOIA S.A., LAUSANNE, CH, Bd. 68, Nr. 1-3, 25. August 2000 (2000-08-25), Seiten 260-265, XP004216624 ISSN: 0925-4005
- THUST, M; SCHÖNING, MJ; VETTER, J; KORDOS, P; LÜTH, H: "A long-term stable penicillin-sensitive potentiometric biosensor with enzyme immobilized by heterobifunctional cross-linking" ANALYTICA CHIMICA ACTA, Bd. 323, Nr. 1-3, 19. April 1996 (1996-04-19), Seiten 115-121, XP002563433
- POGHOSSIAN A ET AL: "An ISFET-based penicillin sensor with high sensitivity, low detection limit and long lifetime" SENSORS AND ACTUATORS B, ELSEVIER SEQUOIA S.A., LAUSANNE, CH LNKD- DOI:10.1016/S0925-4005(01)00609-8, Bd. 76, Nr. 1-3, 1. Juni 2001 (2001-06-01) , Seiten 519-526, XP004241167 ISSN: 0925-4005
- POGHOSSIAN A ET AL: "(Bio-)chemical and physical microsensor arrays using an identical transducer principle" ELECTROCHIMICA ACTA, ELSEVIER SCIENCE PUBLISHERS, BARKING, GB LNKD- DOI:10.1016/S0013-4686(01)00562-X, Bd. 47, Nr. 1-2, 1. September 2001 (2001-09-01), Seiten 243-249, XP004296923 ISSN: 0013-4686
- POGHOSSIAN, A; SCHÖNING, MJ: "Detecting Both Physical and (Bio-)Chemical Parameters by Means of ISFET Devices" ELECTROANALYSIS, Bd. 16, Nr. 22, 28. September 2004 (2004-09-28), Seiten 1863-1872, XP002596394 DOI: 10.1002/elan.200403074
- DAVID ROLKA1 ET AL: "Integration of a Capacitive EIS Sensor into a FIA System for pH and Penicillin Determination", SENSORS, MDPI, BASEL, SU, vol. 4, 30 August 2004 (2004-08-30), pages 84-94, XP007918794, ISSN: 1424-8220
- MICHAEL J SCHÖNING: "Playing around with Field-Effect Sensors on the Basis of EIS Structures, LAPS and ISFETs", SENSORS, MDPI, BASEL, SU, vol. 5, 31 March 2005 (2005-03-31), pages 126-138, XP007918795, ISSN: 1424-8220
- ARSHAK POGHOSSIAN AND MICHAEL J SCHÖNIN ED - ROBERT S MARKS ET AL: "Chemical and Biological Field-Effect Sensors for Liquids A Status Report", HANDBOOK OF BIOSENSORS AND BIOCHIPS, WILEY, GB, 1 January 2007 (2007-01-01), pages 1-17, XP007918796, ISBN: 978-0-470-01905-4
- WU M H ET AL: "Structural properties and sensing performance of high-k Sm2O3 membrane-based electrolyte-insulator-semiconductor for pH and urea detection", SENSORS AND ACTUATORS B, ELSEVIER SEQUOIA S.A., LAUSANNE, CH, vol. 138, no. 1, 24 April 2009 (2009-04-24), pages 221-227, XP026033831, ISSN: 0925-4005, DOI: DOI:10.1016/J.SNB.2009.01.059 [retrieved on 2009-02-10]
- SCHONING M J ET AL: "A capacitive field-effect sensor for the direct determination of organophosphorus pesticides", SENSORS AND ACTUATORS B, ELSEVIER SEQUOIA S.A., LAUSANNE, CH, vol. 91, no. 1-3, 1 June 2003 (2003-06-01) , pages 92-97, XP027389774, ISSN: 0925-4005 [retrieved on 2003-06-01]
- SCHONING M J ET AL: "Silicon-based field-effect devices for (bio-)chemical sensing", ADVANCED SEMICONDUCTOR DEVICES AND MICROSYSTEMS, 2008. ASDAM 2008. INTERNATIONAL CONFERENCE ON, IEEE, PISCATAWAY, NJ, USA, 12 October 2008 (2008-10-12), pages 31-38, XP031403810, ISBN: 978-1-4244-2325-5

## Beschreibung

Die Erfindung betrifft ein Verfahren zur Messung der Konzentration eines Analyten in einer Probeflüssigkeit. Ferner betrifft sie eine Vorrichtung zur Durchführung des Verfahrens.

Sensoren auf Halbleiterbasis, die auf kapazitiven Messprinzipien beruhen, sind bekannt. Diese finden Anwendung auf dem Gebiet der Chemo- und Biosensoren. Unter Biosensoren versteht man Sensoren, die sich beispielsweise die Selektivität von Enzymen zu Nutze machen. Es sind bereits Biosensoren in Siliziumtechnologie bekannt, bei denen ein Enzym auf der Oberfläche des Sensors fixiert ist (DE 44 36 001 C2).

Bei einer Gruppe von Sensoren findet am Sensor eine chemische Reaktion statt, die selektiv für ein Ion oder Molekül ist und bei der gleichzeitig eine pH-Wertänderung eintritt. Anwendungsbeispiele hierfür sind unter anderen die Bestimmung von Schwermetallen und Pestiziden im Abwasser, die Penicillinbestimmung und die DNA-Analyse.

Diesen Sensoren haben gemeinsam, dass sie aufgebaut sind als pH-Sensoren, die mit einer zusätzlichen sensitiven Schicht für den zu bestimmenden Analyten ausgestattet sind, wobei die darunterliegende pH-Wert-sensitive Schicht weiterhin aktiv ist. Dieses Sensorprinzip hat zur Folge, dass mehrere Messungen hintereinander durchgeführt werden müssen, um die Konzentration eines Analyten angeben zu können, da vom Sensor sowohl der pH-Wert einer Probelösung erfasst wird als auch die zusätzliche pH-Wertänderung, die sich durch Reaktion des in der Probelösung vorhandenen Analyten mit der zweiten, sensitiven Schicht ergibt.

Aus der EP 0213825 A ist ein Verfahren zur Messung der Konzentration eines Analyten bekannt, bei dem mehrere Halbleiter-Kapazitätssensoren in einer gemeinsamen Messzelle angeordnet werden. Die Sensoren weisen gleiche Grundstrukturen auf und einige der Sensoren sind mit einer aktiven Schicht beschichtet. Die Sensoren sind gleichzeitig mit der Probe in Kontakt. An den Sensoren liegt eine Spannung an, die sich aus einem Gleichspannungsanteil und einem Wechselspannungsanteil zusammensetzt. Die Kapazitätsänderung wird durch das Anpassen des Gleichspannungsanteils kompensiert. Der Aufbau und das entsprechende Verfahren sind jedoch komplex und fehleranfällig. Insbesondere liegt die Spannung zwischen Sensor und Gegenelektrode an.

Es ist eine Aufgabe der Erfindung eine Vorrichtung oder ein Verfahren bereitzustellen, bei denen eine direkte Bestimmung der Analytkonzentration durch differentielle Messung ermöglicht wird, wobei die Vorrichtung und das Verfahren weniger komplex sein sollen als bekannte Vorrichtungen und Verfahren.

Die Aufgabe wird erfindungsgemäß durch die Gegenstände der Ansprüche 1 und 3 gelöst.

Die Erfindung wird im Folgenden beispielhaft für einen Penicillinsensor beschrieben, ist aber für alle Sensoren anwendbar, die auf dem Prinzip einer Sensorreaktion und gleichzeitiger pH-Wertänderung beruhen.

An einem pH-Sensor, insbesondere mit Siliziumnitrid- oder Tantalpentoxidoberfläche oder einer anderen pH-Wert-sensitiven Oberfläche, wird ein Enzym fixiert, welches selektiv mit in einer zu messenden Probe vorhandenem Penicilin zu Penicillinsäure reagiert unter Freisetzung von H⁺ -Ionen. In der erfindungsgemäßen Messvorrichtung wird nun zur Bestimmung der Penicillinkonzentration eine Differenzmessung durchgeführt. Mit diesem Aufbau ist es möglich, direkt die Penicillinkonzentration zu bestimmen. So müssen nicht länger aufeinander folgende Messungen durchgeführt werden, wie es im Stand der Technik nötig ist.

Zwei Elektrolyte-Insulator-Semiconductor (EIS) Sensoren stehen gleichzeitig in Kontakt mit der zu untersuchenden Probeflüssigkeit. Ein erster EIS-pH-Sensorermittelt den pH-Wert der zu bestimmenden Probeflüssigkeit. Ein zweiter EIS-Sensor, der Biosensor, weist eine zum ersten Sensor identische Struktur auf, wobei zusätzlich auf eine pH-aktive Schicht die penicillinempfindliche, enzymbasierte Struktur folgt. An die penicillinempfindliche Struktur lagert sich in der Probeflüssigkeit vorhandenes Penicillin selektiv an, wobei das Penicillin zu Penicillinsäure reagiert und H⁺ -Ionen freigesetzt werden. Diese werden vom zweiten Sensor zusätzlich zu den H⁺ -Ionen detektiert, die dem ursprünglichen pH-Wert der Probeflüssigkeit entsprechen. Mittels elektronischer Auswerteeinheit wird durch Differenzbildung aus den Messsignalen beider Sensoren die H⁺ - Ionen-Konzentration ermittelt, welche allein auf die enzymatische Reaktion zurück zu führen ist und die der Penicillinkonzentration entspricht.

Besonders vorteilhaft ist die mögliche Miniaturisierung der beschriebenen Messvorrichtung sowohl hinsichtlich der fluidischen Komponenten als auch der Mess- und Auswerteelektronik zusammen in einer kompakten Baueinheit für industrielle Anwendungen.

Zur Erhöhung der Lebensdauer der Sensoren ist eine abwechselnde Kontaktierung dieser mit der Probeflüssigkeit und einer Pufferlösung zur Neutralisierung mittels Sprühverfahren besonders günstig.

Weitere Merkmale und Vorteile ergeben sich aus der folgenden Beschreibung unter Bezugnahme auf die beigefügten Zeichnungen. In den Zeichnungen zeigen:
- Figur 1 eine erste Ausführungsform einer Sensoranordnung mit zwei Sensoren,
- Figur 2 eine zweite, synchronisierte Ausführungsform entsprechend Fig. 1,
- Figur 3 eine dritte Ausführungsform einer Sensoranordnung mit zwei Sensoren,
- Figur 4 eine Ausführungsform mit beliebiger Anzahl von Sensoren,
- Figur 5 die fluidische Realisierung der Ausführungsform einer Sensoranordnung mit zwei Sensoren.

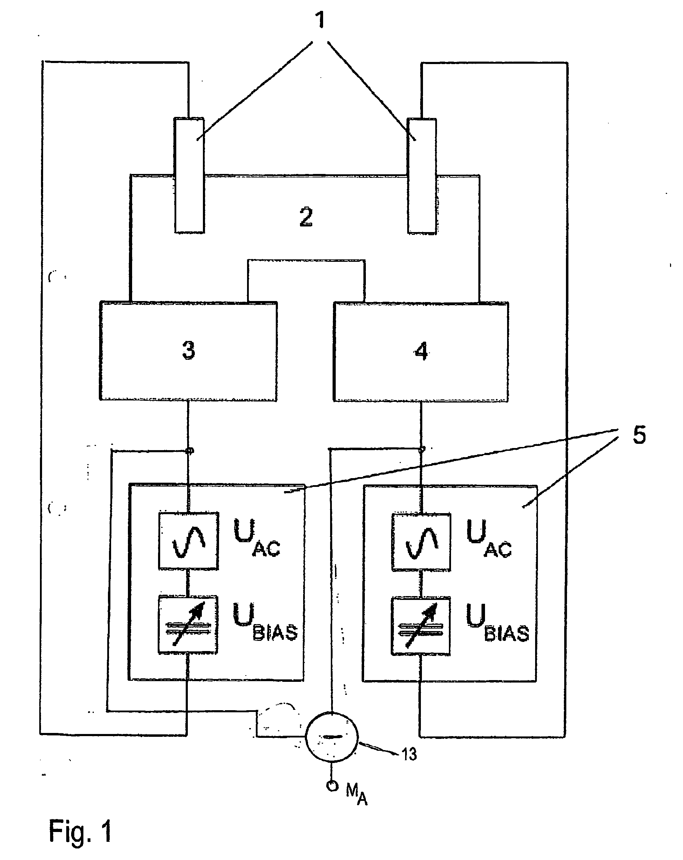

Figur 1 zeigt schematisch eine erfindungsgemäße, kapazitive Sensoranordnung gemäß einer ersten Ausführungsform. Jeweils eine Kontaktierungsfläche eines pH-Sensors 3 und eines beispielsweise penicillinempfindlichen Biosensors 4 stehen in fluidischem Kontakt mit dem in der vorzugsweise wässrigen Probeflüssigkeit 2 enthaltenen Analyten 2. Jedem Sensor 3, 4 ist eine Referenzelektrode 1 (z.B. Ag/AgCl) zugeordnet, die in die Probeflüssigkeit 2 eintaucht. Optional können zusätzliche Elektroden (z.B. Platindraht) eingesetzt werden, die zur Sicherstellung der Kontinuität der Messung vorteilhaft sein können. Die Sensorrückseiten sind mittels Sensorrückseitenkontaktierungen direkt an zwei separate Messschaltungen 5 angeschlossen.

Beide Messschaltungen 5 zur Kapazitätmessung sind in gleicher Weise aufgebaut, wie bereits in der DE19708166 beschrieben. Jede enthält eine steuerbare Gleichspannungsquelle in Reihe mit einer Wechselspannungsquelle. Das Messprinzip beruht darauf, daß mittels des Wechselspannungsanteils U_{AC} die Kapazität des Sensors bestimmt wird und über die Steuerung der Gleichspannung U_{BIAS} die durch Anwesenheit des Analyten (d.h. die zusätzlich freigesetzten Ionen) verursachte Kapazitätsänderung ausgeregelt wird. Das an den Sensor angelegte Gleichspannungspotential entspricht dann einem in der jeweiligen Messschaltung 5 bestimmten Messwert. Die beide Messschaltungen 5 enthaltende Messelektronik bildet dann ausgehend von den beiden Messwerten mittels einer Subtrahierschaltung 13 das Messsignal M_{A}, welches direkt die Konzentration des Analyten angibt. Bei dem gewählten Beispiel entspricht die Differenz aus den beiden H⁺ -Ionen-Konzentrationen am Biosensor 4 und am pH-Sensor 3 der Penicillinkonzentration in der Probeflüssigkeit.

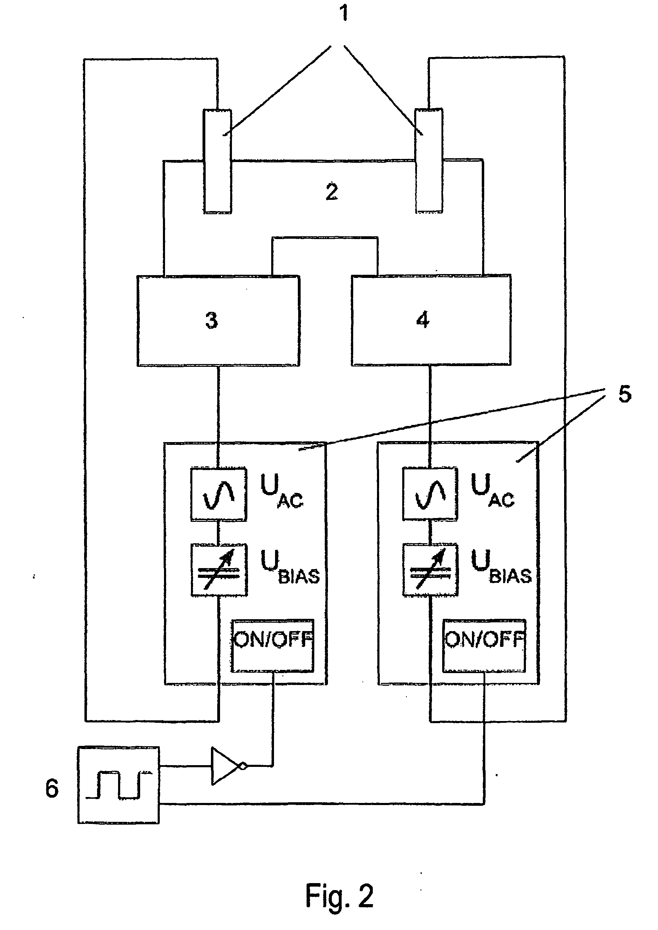

In Figur 2 ist eine optimierte Ausführungsform dargestellt, die zusätzlich eine Synchronisation mittels Synchronisator 6 ermöglicht. Die beiden Messschaltungen 5 werden durch den Synchronisator alternierend aktiviert und deaktiviert.

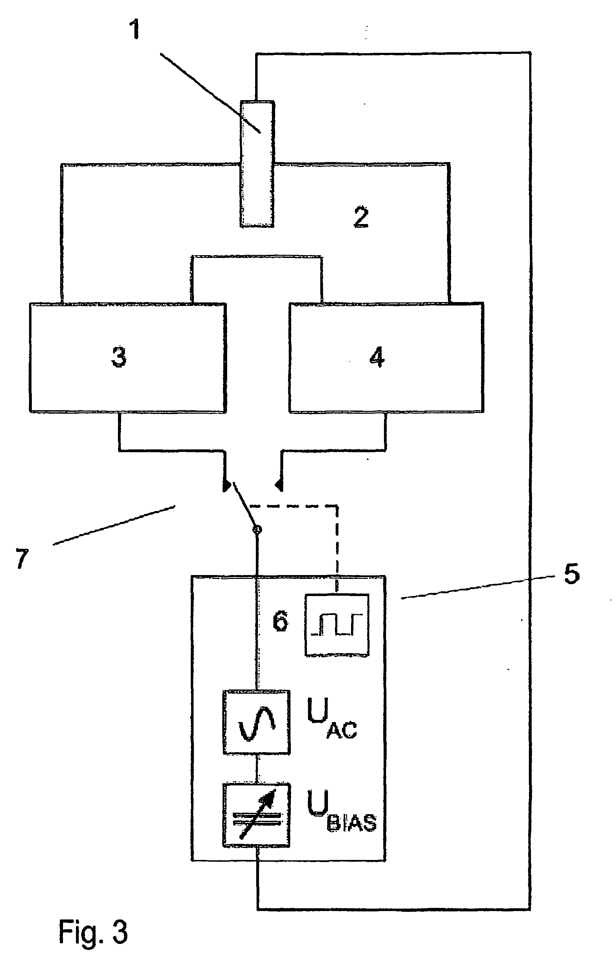

Figur 3 zeigt eine weitere Ausführungsform der Erfindung, welche eine Vereinfachung der Ausführungsformen gemäß Figur 1 und 2 darstellt. Eine einzige Referenzelektrode 1 taucht in den Analyten 2 ein und steht in elektrischer Verbindung zu einer Messschaltung 5, welche mittels Schalter 7 abwechselnd (durch Steuerung mit einem Taktsignal) entweder zur Sensorrückseitenkontaktierung des ersten Sensors 3 oder des zweiten Sensors 4 zugeschaltet wird. Für die Differenzberechnung erfolgt eine Zwischenspeicherung der für die Sensoren erhaltenen Messwerte.

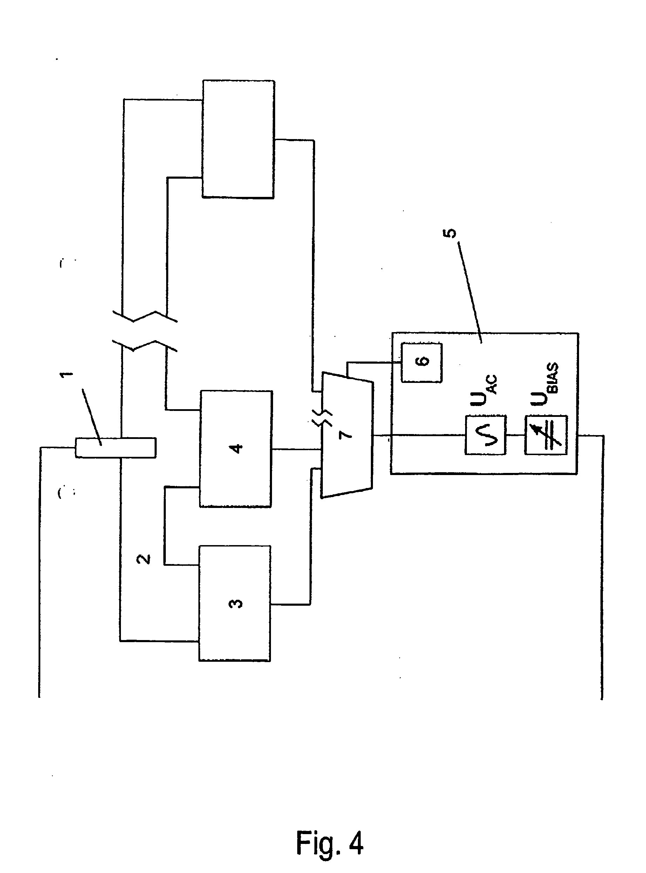

Das Messprinzip und die Auswertung sind wie in Figur 4 dargestellt auf eine beliebige Anzahl parallel geschalteter Sensoren erweiterbar, wobei die Differenz jeweils zum pH-Sensor bestimmt wird.

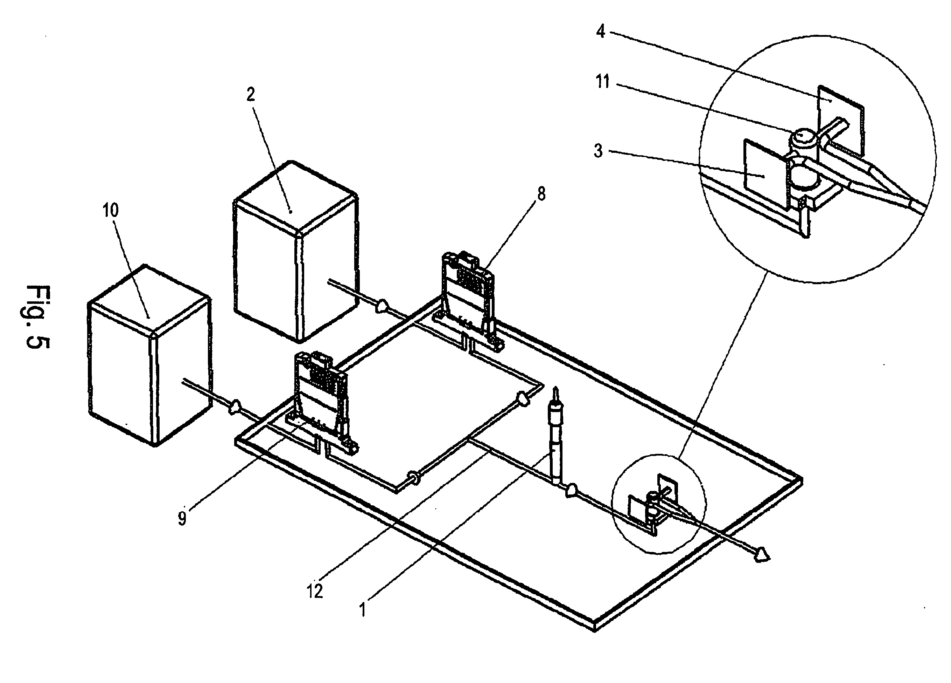

Eine fluidische Realisierung der Ausführungsform einer Sensoranordnung mit zwei Sensoren ist in Figur 5 gezeigt.

Aus einem Probenbehälter mit Probeflüssigkeit 2 wird dieser in einem Fluidkanal 12 über ein erstes Ventil 8 zu einer Verteilerdüse 11 geführt, welche den ersten Sensor 3 (pH-Sensor) und den zweiten Sensor 4 (Penicillinsensor) jeweils auf einer Sensorseite mit Probeflüssigkeit besprüht. Eine Referenzelektrode 1 taucht in den Fluidkanal 12. Die Sensorrückseiten und die Referenzelektrode haben wie oben beschrieben elektrische Verbindung mit der Messelektronik (in Fig. 5 nicht dargestellt).

Ein Behälter mit Pufferlösung 10 versorgt ein zweites Ventil 9 mit Pufferlösung, die jeweils im Anschluss an eine oder mehrere Messungen in den Fluidkanal 12 geleitet wird und über die Verteilerdüse 11 zu den Sensoren 3, 4 gelangt. Dieser der Messung nachgeschaltete Spülvorgang sorgt für eine Neutralisierung der Sensoroberflächen und verlängert die Lebensdauer der Sensoren erheblich.

Die beiden Ventile 8 und 9 sind im Ruhemodus beide geschlossen, im Messmodus ist Ventil 8 geöffnet und Ventil 9 geschlossen, und im Reinigungsmodus ist Ventil 8 geschlossen und Ventil 9 geöffnet.

## Patentansprüche

1. Verfahren zur Messung der Konzentration eines Analyten in einer Probeflüssigkeit (2), bei dem in einer gemeinsamen Messzelle zwei Sensoren vom Electrolyte-Insulator-Semiconductor-Typ (3, 4) angeordnet werden, die eine identische Grundstruktur mit einer aktiven, pH-sensitiven Schicht aufweisen und von denen einer einen Meßsensor mit aktiver Transduktorschicht und ein anderer einen Referenzsensor ohne aktive Transduktorschicht bildet, wobei:
- die Sensoren (3, 4) gleichzeitig mit der Probeflüssigkeit in Kontakt gebracht werden,
- zwischen jedem Sensor und einer gleichzeitig von der Probeflüssigkeit (2) kontaktierten Referenzelektrode (1) eine Vorspannung angelegt wird, die sich aus einer elektrischen Gleichspannung und einer überlagerten Wechselspannung zusammensetzt,
- über die Steuerung der an den Messsensor (4) angelegten Vorspannung die durch den Analyt verursachte Kapazitätsänderung ausgeregelt wird,
- ein Meßsignal erzeugt wird durch Berechnung der Differenz zwischen Spannungswerten, die für die Potentiale der an den Meßsensor (4) bzw. an den Referenzsensor (3) angelegten Gleichspannung repräsentativ sind, **dadurch gekennzeichnet, dass** die Messzelle alternierend mit der den Analyten enthaltenden Probeflüssigkeit (2) und einer Pufferlösung (10) beaufschlagt wird,
- jeder Sensor (3, 4) eine in ihm eigene zugeordnete Referenzelektrode (1) und eine eigene zugeordnete elektronische Messschaltung aufweist, mit der die gesteuerte Vorspannung mit überlagerter Wechselspannung angelegt wird.

2. Verfahren nach Anspruch 1, bei dem die Sensoren (3, 4) gleichzeitig betrieben werden.

3. Vorrichtung zur Messung der Konzentration eines Analyten in einer Probeflüssigkeit (2), insbesondere zur Durchführung des Verfahrens nach einem der vorstehenden Ansprüche, mit einer gemeinsamen Messzelle, in der wenigstens zwei Sensoren vom Electrolyte-Insulator-Semiconductor-Typ (3, 4) angeordnet sind, die eine identische Grundstruktur mit einer aktiven pH-sensitiven Schicht aufweisen und von denen einer einen Meßsensor (4) mit aktiver Transduktorschicht und ein anderer einen Referenzsensor (3) ohne aktive Transduktorschicht bildet, und mit einer Messelektronik (5), die eine steuerbare Gleichspannungsquelle in Reihe mit einer Wechselspannungsquelle aufweist, um durch Steuerung der Gleichspannung Kapazitätsänderungen des Meßsensors (4), die durch den Analyt verursacht sind, auszuregeln und ein Meßsignal abzuleiten, indem die Differenz berechnet wird zwischen Spannungswerten, die für die Potentiale der an den Meßsensor (4) bzw. an den Referenzsensor (3) angelegten Gleichspannung repräsentativ sind, **dadurch gekennzeichnet, dass** die Messzelle durch alternierend gesteuerte Ventile mit einer Probeflüssigkeit (2) und mit einer Pufferlösung (10) beaufschlagbar ist, und dass jedem Sensor eine eigene Referenzelektrode (1) und eine eigene elektronische Messschaltung (5) zugeordnet sind.

4. Vorrichtung nach Anspruch 3, bei der die Transduktorschicht ein fixiertes Enzym aufweist.

## Claims

1. A method of measuring the concentration of an analyte in a sample fluid (2), in which two sensors of the electrolyte-insulator-semiconductor type (3, 4) are arranged in a shared measuring cell, which have an identical basic structure with an active, pH-sensitive layer and one of which forms a measuring sensor with an active transductor layer and another one of which forms a reference sensor without an active transductor layer, the method comprising:
- contacting the sensors (3, 4) with the sample fluid simultaneously;
- applying a bias voltage which is composed of an electric DC voltage and a superimposed AC voltage between each sensor and a reference electrode (1) which is simultaneously contacted by the sample fluid (2);
- eliminating the change in capacitance caused by the analyte by controlling the bias voltage applied to the measuring sensor (4);
- generating a measuring signal by calculating the difference between voltage values that are representative of the potentials of the DC voltage applied to the measuring sensor (4) and to the reference sensor (3), respectively, **characterized in that** the measuring cell is alternately exposed to the sample fluid (2) containing the analyte and to a buffer solution (10);
- each sensor (3, 4) includes its own associated reference electrode (1) and its own associated electronic measuring circuit by means of which the controlled bias voltage with the superimposed AC voltage is applied.

2. The method according to claim 1, in which the sensors (3, 4) are operated simultaneously.

3. An apparatus for measuring the concentration of an analyte in a sample fluid (2), in particular for carrying out the method according to any of the preceding claims, comprising a shared measuring cell in which at least two sensors of the electrolyte-insulator-semiconductor type (3, 4) are arranged which have an identical basic structure with an active, pH-sensitive layer and one of which forms a measuring sensor (4) with an active transductor layer and another one of which forms a reference sensor (3) without an active transductor layer, and comprising an electronic measuring device (5) including a controllable DC voltage source connected in series with an AC voltage source to eliminate changes in capacitance of the measuring sensor (4) which are caused by the analyte by controlling the DC voltage and to derive a measuring signal by calculating the difference between voltage values that are representative of the potentials of the DC voltage applied to the measuring sensor (4) and to the reference sensor (3), respectively, **characterized in that** the measuring cell is adapted to be exposed to a sample fluid (2) and to a buffer solution (10) by alternately controlled valves, and that each sensor has its own reference electrode (1) and its own electronic measuring circuit (5) associated with it.

4. The apparatus according to claim 3, in which the transductor layer includes a fixed enzyme.

## Revendications

1. Procédé de mesure de la concentration d'un analyte dans un liquide échantillon (2), dans lequel on agence dans une cellule de mesure commune deux capteurs du type Electrolyte-Insulator-Semiconductor (3, 4), lesquels présentent une structure de base identique avec une couche active sensible au pH et dont un forme un capteur de mesure avec une couche de transducteur active et un autre forme un capteur de référence sans couche de transducteur active, dans lequel :
- les capteurs (3, 4) sont amenés simultanément en contact avec le liquide échantillon,
- une prétension composée d'une tension électrique continue et d'une tension alternative superposée est appliquée entre chaque capteur et une électrode de référence (1) contactée simultanément par le liquide échantillon (2),
- le changement de capacité causé par l'analyte est annulé par un asservissement de la prétension appliquée au capteur de mesure (4),
- un signal de mesure est engendré en calculant la différence entre des valeurs de tension représentatives des potentiels de la tension continue appliquée au capteur de mesure (4) et au capteur de référence (3), respectivement, **caractérisé en ce que** la cellule de mesure est exposée en alternance au liquide échantillon (2) contenant l'analyte et à une solution tampon (10),
- chaque capteur (3, 4) présente une électrode de référence (1) qui lui est associée et un circuit de mesure électronique associé au moyen duquel la prétension asservie est appliquée avec tension alternative superposée.

2. Procédé selon la revendication 1, dans lequel les capteurs (3, 4) fonctionnent simultanément.

3. Dispositif de mesure de la concentration d'un analyte dans un liquide échantillon (2), en particulier pour mettre en oeuvre le procédé selon l'une quelconque des revendications précédentes, comportant une cellule de mesure commune dans laquelle sont agencés au moins deux capteurs du type Electrolyte-Insulator-Semiconductor (3, 4), lesquels présentent une structure de base identique avec une couche active sensible au pH et dont un forme un capteur de mesure (4) avec une couche de transducteur active et un autre forme un capteur de référence (3) sans couche de transducteur active, et comportant un système électronique de mesure (5), qui présente une source de tension continue commandable en série avec une source de tension alternative, pour annuler par asservissement de la tension continue des changements de capacité du capteur de mesure (4) qui sont causés par l'analyte et dériver un signal de mesure en calculant la différence entre des valeurs de tension représentatives des potentiels de la tension continue appliquée au capteur de mesure (4) et au capteur de référence (3), respectivement, **caractérisé en ce que** la cellule de mesure peut être exposée, par l'intermédiaire de valves commandées en alternance, à un liquide échantillon (2) et à une solution tampon (10), et **en ce que** chaque capteur présente une électrode de référence (1) qui lui est associée et un circuit de mesure électronique (5) associé.

4. Procédé selon la revendication 3, dans lequel la couche de transducteur présente un enzyme fixé.
